Europäisches Patentamt

European Patent Office

Office européen des brevets

(19)

(11) Numéro de publication: **0 267 829 B1**

(12) **FASCICULE DE BREVET EUROPEEN**

(45) Date de publication de fascicule du brevet:
27.03.91

(51) Int. Cl.⁵: **A01D 46/28**

(21) Numéro de dépôt: **87402309.6**

(22) Date de dépôt: **16.10.87**

(54) **Machine pour la récolte des fruits, baies et similaires portés par des arbres et arbustes fruitiers plantés en ligne.**

(30) Priorité: **27.10.86 FR 8614877**

(43) Date de publication de la demande:
**18.05.88 Bulletin 88/20**

(45) Mention de la délivrance du brevet:
**27.03.91 Bulletin 91/13**

(84) Etats contractants désignés:
**DE ES GB IT**

(56) Documents cités:
**FR-A- 1 570 246**
**FR-A- 2 522 246**
**FR-A- 2 571 210**

(73) Titulaire: **HESSTON BRAUD**

**F-85220 COEX(FR)**

(72) Inventeur: **Merant, Jean-Camille**
**Le Portail Meigne**
**F-49700 Doue la Fontaine(FR)**

(74) Mandataire: **Lefebure, Gérard et al**
**Office Blétry 2, boulevard de Strasbourg**
**F-75010 Paris(FR)**

# Description

La présente invention concerne une machine pour la récolte des fruits, baies et similaires portés par des arbres et arbustes fruitiers plantés en ligne, du type connu par le document FR-A-2522246 et comprenant un châssis enjambeur mobile à travers champs, et un ensemble de secouage monté sur le châssis et comportant au moins une paire d'organes secoueurs de forme allongée, qui s'etendent sensiblement horizontalement dans la direction de l'axe médian longitudinal de la machine et qui sont espacés transversalement l'un de l'autre et situés respectivement de part et d'autre dudit axe médian longitudinal, chaque organe secoueur étant constitué par une tige dont les deux extrémités sont reliées à un support et qui a une forme telle qu'elle définit avec l'autre tige, de l'avant vers l'arrière de la machine, un convergent d'entrée, une zone active de secouage et un divergent de sortie pour les arbres et arbustes fruitiers, et un mécanisme de commande relié aux tiges pour les animer en synchronisme d'un mouvement de va-et-vient dans une direction transversale par rapport audit axe médian longitudinal.

L'invention concerne notamment, masi non exclusivement, la récolte des raisins, et elle sera plus particulièrement décrite à propos de ce type de récolte, bien que la machine de la présente invention puisse être également utilisée pour la récolte d'cuatres fruits et baies, comme par exemple les cassis, les groseilles, les framboises ou encore les grains de café.

Le principe de récolte des raisins est pratiquement le même pour la plupart des machines à vendanger connues. Il s'agit de secouer ou de battre la vigne en lui imprimant un mouvement sinusoïdal ou pseudosinusoïdal d'une certaine amplitude et d'une certaine fréquence propres à détacher les raisins ou les grappes de raisin. Ce mouvement est communiqué à la vigne par des organes secoueurs ou batteurs disposés de manière à agir soit sur les ceps ou pied de vigne, soit sur la végétation, c'est-à-dire dans la zone fructifère de la vigne, selon le type et le nombre d'organes secoueurs ou batteurs utilisés. Le pourcentage des grappes et/ou des grains de raisin qui sont détachés de la vigne dépend du nombre et de l'amplitude des oscillations auxquelles une grappe donnée de raisin est soumise. Plus une grappe donnée de raisin est secouée énergiquement et un grand nombre de fois, plus ladite grappe ou ses grains individuels ont des chances d'être détachés de la vigne. Le nombre et l'amplitude des oscillations auxquelles une grappe donnée de raisin est soumise dépendent eux mêmes de divers paramètres pouvant être sélectionnés, notamment l'amplitude et la fréquence du mécanisme de commande associé aux organes secoueurs ou batteurs, la longueur de la zone active desdits organes secoueurs ou batteurs, la rigidité ou la flexibilité de ceux-ci et la vitesse d'avance de la machine, et d'autres facteurs imposés par la vigne elle-même, notamment son mode de conduite, sa forme et la résistance qu'elle oppose aux mouvements des organes secoueurs ou batteurs.

D'un autre côté, au moins dans certains cas, les organes secoueurs ou batteurs, en provoquant le détachement des grappes ou des grains de raisin, occasionnent aussi des dégâts à la vigne pouvant nuire à sa santé. En effet, dans le cas où les organes secoueurs ou batteurs sont agencés pour agir sur la végétation de la vigne, ils provoquent en général :

a) un effeuillage diminuant l'activité de photosynthèse de la vigne, provoquant des difficultés de nettoyage de la récolte (feuilles mélangées au raisin récolté) et pouvant engendrer des problèmes oenologiques;

b) la casse d'un nombre important de sarments, conduisant à des difficultés pour la taille ultérieure de la vigne;

c) un ébourgeonnage pouvant compromettre le rendement futur (fructification) de la vigne;

d) des blessures aux sarments favorisant la pénétration des maladies.

Plus les organes secoueurs ou batteurs agissent énergiquement et un grand nombre de fois sur la végétation d'un plan de vigne, plus les dégâts susmentionnés sont nombreux et importants. Il est donc habituellement nécessaire de trouver un compromis entre les divers paramètres susmentionnés pour obtenir un pourcentage acceptable de grappes ou de grains de raisin récoltés sans occasionner trop de dégâts à la vigne.

Dans un premier type connu de machine à vendanger (voir les brevets français n ° - 2 293 132, 2 313 859, 2 373 222, 2 437 769, 2 509 955 et 2 554 673, et le brevet US 4 418 521), l'ensemble de secouage comporte deux séries de fouets ou fléaux plus ou moins flexibles, espacés verticalement, les fouets ou fléaux de chaque série étant fixés rigidement, par une de leurs extrémités, à une plaque verticale porte-fouets pouvant être animée d'un mouvement d'oscillation autour d'un axe vertical, l'autre extrémité, appelée pointe, des fouets étant libre et constituant la partie active de ceux-ci. Dans ce premier type connu de machine à vendanger, les fouets ou fléaux doivent être relativement flexibles pour pouvoir s'adapter individuellement aux variations d'épaisseur de la végétation de la vigne. En effet, dans un rang de vignes, chaque plant de vigne a généralement une végétation dont l'épaisseur varie dans le sens de la hauteur et, à une hauteur donnée, l'épaisseur de la végétation varie d'un plant de vigne au suivant.

Pour obtenir une bonne adaptabilité aux variations d'épaisseur de la végétation, on a donc intérêt à utiliser des fouets ou fléaux ayant une bonne flexibilité. Toutefois, plus les fouets ou fléaux sont flexibles, plus l'amplitude réelle de mouvement des pointes des fouets est variable et, par suite, plus l'efficacité du secouage, donc l'efficacité de la récolte est variable selon la résistance opposée aux fouets ou fléaux par la végétation de la vigne. En effet, si la résistance est forte, l'amplitude de mouvement des pointes des fouets ou fléaux est presque annulée et l'efficacité du secouage en ce qui concerne le détachement des grappes ou des grains de raisin est nul ou presque nul. Par contre, si la résistance est faible, l'amplitude de mouvement des pointes des fouets ou fléaux est grande et l'effcacité du secouage est meilleure, mais, en cas de résistance très faible ou nulle, les pointes des fouets ou fléaux ont tendance à aquerrir une amplitude et une vitesse excessive (on dit que les fouets "s'emballent" ou s'affolent"). Cela se produit notamment lorsque les fouets passent en regard d'un plant de vigne dont la végétation est peu robuste ou a une faible épaisseur ou dans le cas où les fouets ou fléaux passent devant un espace ou "trou" entre deux plants consécutifs de vigne. Il en résulte alors un effeuillage très important et la casse d'un nombre prohibitif de sarments, voire une décapitation complète du plant de vigne de faible résistance et d'au moins une partie du plant de vigne immédiatement suivant. Pour cette raison, on est donc habituellement conduit à utiliser des fouets ou flèaux semi-rigides ou semi-flexibles.

Par ailleurs, dans le premier type connu de machine à vendanger, les fouets ou fléaux ont une longueur relativement courte (en général environ lm), de sorte que leurs parties actives, dans la région des pointes des fouets ou fléaux, sont elles-mêmes de courte longueur. Plusieurs solutions peuvent être adoptées pour obtenir qu'une grappe donnée de raisins soit soumise à un nombre de battements suffisants pour provoquer à coup sûr son détachement de la vigne. Une première solution consiste naturellement à augmenter la fréquence d'oscillation du mécanisme de commande des fouets, mais alors les pointes des fouets ont une vitesse plus grande et les inconvénients susmentionnés, qui sont liés à la grande vitesse et à la grande amplitude de mouvement des pointes des fouets lorsqu'ils ne rencontrent qu'une faible résistance de la part de la végétation, se font encore plus sentir. Une seconde solution consiste à diminuer la vitesse d'avance de la machine à vendanger, mais cela augmente le temps nécessaire à la vendange. Une troisième solution consiste à augmenter la longueur de la zone active des fouets en adoptant des fouets plus longs et coudés, dont les parties actives en vis-à-vis sont sensiblement parallèles entre elles (voir les brevets français n ° - 2 313 859, 2 509 955, 2 554 673 et le brevet US N °4 418 521). Toutefois, l'augmentation de la longueur de la partie active des fouets ne peut être que très limitée notamment à cause de la tenue mécanique des fouets. Une quatrième solution consiste à prévoir deux ensembles successifs de secouage (voir par exemple le brevet français N °- 2 293 132 et le brevet US N °. 4 418 521). Toutefois, cette dernière solution est relativement coûteuse (châssis de machine plus long, deux ensembles de secouage et les mécanismes de commandes y associés).

D'après ce qui précède, il est clair que pour obtenir une bonne adaptabilité des fouets ou fléaux aux variations d'épaisseur de la végétation de la vigne, aussi bien dans le sens de la hauteur des plants de vigne que dans le sens longitudinal des rangs de vignes, un pourcentage élevé de fruits récoltés dans un temps court par unité de surface cultivée et un minimum de dégâts à la vigne avec les machines à vendanger connues du premier type décrit ci-dessus, le choix des divers paramètres de construction et de fonctionnement de la machine est difficile et ne peut résulter que d'un compromis.

Dans un second type de machines à vendanger connues (brevets français N °-2 516 742 et 2 522 246), chaque batteur de chacun des deux jeux de batteurs est constitué par une tige métallique, du type corde à piano, dont les deux extrémités sont fixées rigidement à un support vertical et longitudinal, en forme de cadre, un pour chaque série de batteurs, chaque support étant soit articulé sur le châssis de la machine autour d'un axe vertical situé à proximité de l'une de ses extrémités (FR.2 516 742), soit monté mobile sur le châssis par des moyens assurant le maintien permanent en position parallèle des deux cadres de support l'un par rapport à l'autre lors de leur mouvement d'oscillation (FR. 2 522 246). Un dispositif d'entraînement à mouvement alternatif est relié à chacun des deux cadres de support pour les faire osciller autour d'une position moyenne. Du fait que les deux cadres de support sont rigides et que les batteurs ont leurs deux extrémités fixées rigidement aux cadres de support, la vitesse de déplacement des batteurs et leur amplitude réelle de mouvement sont bien contrôlées et correspondent à celles des dispositifs d'entraînement à mouvement alternatif associés aux cadres de support. Il en résulte que, lorsque la végétation de la vigne oppose une faible résistance aux batteurs, ceux-ci n'ont pas tendance à "s'affoler" et, dans ces conditions, les machines à vendanger connues de ce deuxième type provoquent des dégâts à la vigne moins important que ceux provoqués par les machines à vendanger du premier type, dont les organes secoueurs sont constitués par des fouets ou fléaux relativement flexibles et ayant une extrémité libre. En outre, du fait que les batteurs ont une partie active de longueur relativement grande, leur action sur chaque grappe de raisins, à amplitudes identiques de mouvement, à fréquences identiques d'oscillation et à vitesses identiques d'avancement de la machine, a une durée plus longue que dans le cas des machines à vendanger connues du premier type, ce qui permet d'obtenir théoriquement un meilleur pourcentage de fruits récoltés. Toutefois, bien qu'il soit prévu de réaliser les batteurs en corde à piano, leur possibilité de déformation élastique et, par suite, leur possibilité d'adaptation aux variations d'épaisseur de la végétation de la vigne ou à un désalignement de la machine par rapport à un rang de vignes est relativement faible. Ceci est si vrai que dans le brevet FR. 2 516 742, il est prévu de relier chaque cadre de support à l'extrémité inférieure d'un bras vertical articulé à son extrémité supérieure sur le châssis de la machine autour d'un axe horizontal et longitudinal, chaque bras étant rappelé dans une position verticale par l'action combinée d'une masse et d'un ressort. Avec un tel montage, les deux séries de batteurs s'écartent et se rapprochent automatiquement l'une de l'autre en fonction de la variation de l'épaisseur de la végétation de la vigne lorsque la machine se déplace le long d'un rang de vignes, mais cette adaptation d'écartement des deux séries de batteurs à la variation d'épaisseur de la végétation ne s'effectue que globalement pour chaque série de batteurs. En conséquence, lorsque les batteurs passent devant un plant de vigne dont la végétation présente une forte variation d'épaisseur dans le sens de la hauteur, l'écartement des deux séries de batteurs se règle automatiquement sur la partie la plus épaisse de la végétation du plant de vigne. Il en résulte que les batteurs situés en regard des parties les moins épaisses de la végétation n'ont que peu ou pas du tout d'action sur ces parties de la végétation et que les raisins qui s'y trouvent sont récoltés en faible quantité ou pas du tout récoltés. Il en résulte que, dans la pratique et dans des conditions opératoires identiques, les machines à vendanger connues du deuxième type ne permettent pas d'obtenir un pourcentage de fruits récoltés sensiblement plus élevé que celui des machines à vendanger connues du premier type.

Dans un troisième type de machines à vendanger connues (brevets FR 2 417 247, 2 417 248 et 2 515 926 et brevets US 4 286 426 et 4 432 190), il est prévu deux organes secoueurs, sensiblement en forme de ski, ayant chacun une partie rectiligne relativement longue et, à chaque extrémité, une partie inclinée ou recourbée latéralement vers l'extérieur de la machine. Dans ces machines connues, la vitesse et l'amplitude réelle de mouvement des organes secoueurs sont bien contrôlées et correspondent à celles des dispositifs d'entraînement à mouvement alternatif associés aux organes secoueurs. Toutefois, du fait que les organes secoueurs sont très rigides, ont une partie active de longueur relativement grande et agissent sur la partie supérieure des ceps de vigne, ils présentent un risque d'endommagement desdits ceps par un frottement prolongé sur ceux-ci. En outre, ils présentent un risque de déracinement des ceps dans le cas où ceux-ci sont particulièrement robustes et rigides. En outre, un tel système de secouage n'est efficace que pour certains types de vignes, dans lesquels la zone fructifère se trouve essentiellement dans une zone étroite (mesurée dans le sens de la hauteur) et située près de la partie supérieure des ceps de vigne. Il ne convient pas dans tous les cas où la zone fructifère s'étend sur une hauteur importante pouvant aller de quelques centimètres au dessus du sol à une grande distance (parfois plus d'un mètre) au-dessus du tronc ou cep de vigne.

La présente invention a pour but de fournir une machine de récolte de fruits, baies et similaires, dont les organes secoueurs, en forme de tiges, sont capables de s'adapter individuellement aux variations d'épasseur de la végétation des arbres et arbustes fruitiers comme dans le cas des machines à vendanger connues du premier type, à fouets ou fléaux, mais dont les parties actives ont une vitesse et une amplitude réelle de mouvement bien contrôlées, de telle sorte que le secouage est efficace même à des fréquences d'oscillation relativement basses et quelle que soit la résistance opposée par la végétation, et que les parties actives des tiges n'ont pas tendance à "s'affoler" ou à "s'emballer" et à provoquer des dégâts aux arbres et arbustes fruitiers lorsque la résistance opposée par la végétation de ceux-ci est faible.

La présente invention a également pour but de fournir une machine de récolte dans laquelle les organes secoueurs, en forme de tiges, ont des parties actives qui ont une longueur nettement plus importante que celle des fouets ou fl éaux des machines à vendanger connues du premier type, sans qu'il en résulte une augmentation de la vitesse et de l'amplitude réelle de mouvement des parties actives des tiges, augmentation qui, dans les machines connues à fouets ou fléaux, provoquerait des problèmes de tenue mécanique des fouets et des dégâts plus importants aux arbres et arbustes fruitiers.

A cet effet, la machine de récolte de la présente invention est caractérisée en ce que les tiges constituant les organes secoueurs sont en une matière ayant une grande flexibilité et sont courbées en forme d'arc, dont la convexité est tournée vers l'axe médian longitudinal de la machine, en ce que les extrémités des tiges flexibles sont maintenues à une distance sensiblement constante de l'axe médian longitudinal de la machine, et en ce que le mécanisme de commande est agencé pour faire varier cycliquement la courbure des tiges flexibles autour d'une valeur de courbure moyenne, de telle façon que l'une des tiges flexibles ait une valeur maximale de courbure quand l'autre tige flexible a une valeur minimale de courbure et vice-versa.

Suivant une forme possible d'exécution de la présente invention, chaque tige flexible a une de ses extrémités qui est articulée à un point fixe de la machine, et son autre extrémité qui est attachée à un point mobile dans une direction sensiblement parallèle à l'axe médian longitudinal de la machine. Suivant une autre forme d'exécution possible, chaque tige flexible a ses deux extrémités qui sont attachées à des points mobiles dans une direction sensiblement paralléle audit axe médian longitudinal.

Etant donné que les extrémités de chaque tige flexible sont attachées soit à un point fixe et à un point mobile dans une direction longitudinale, soit à deux points mobiles dans ladite direction longitudinale, le mouvement dans le sens transversal de la partie intermédiaire des tiges flexibles, c'est-à-dire de leur partie active, résulte de la variation de courbure des tiges flexibles et l'amplitude réelle de ce mouvement est égale, pour chaque tige flexible, à la différence de longueur de la flèche de l'arc formé par la tige flexible en position de courbure maximale et en position de courbure minimale. Cette amplitude réelle de mouvement est bien contrôlée et dépend pratiquement uniquement de l'amplitude de mouvement du mécanisme de commande associé aux tiges flexibles. En particulier, elle ne dépend pas ou pratiquement pas de la fréquence d'oscillation du mécanisme de commande, En outre, étant donné que chaque tige est attachée à ses deux extrémités, il n'y a plus aucun risque que l'une des extrémités des tiges aquière une vitesse et une amplitude de mouvement importantes et incontrôlées lorsque les tiges rencontrent une faible résistance de la part de la végétation des arbres et arbustes fruitiers. Par suite, dans ces conditions, les risques de dégâts aux arbres et arbustes fruitiers sont pratiquement éliminés par rapport aux machines à vendanger dans lesquelles les organes secoueurs sont constitués par des fouets ou fléaux dont l'une des extrémités est libre. En outre, toujours du fait que chaque tige flexible est attachée à ses deux extrémités, chaque tige peut être réalisée en une matière beaucoup plus flexible que les fouets ou fléaux, ayant une extrémité libre, des machines à vendanger connues. Bien que chaque tige soit attachée à ses deux extrémités, chaque tige peut néanmoins s'adapter élastiquement et individuellement, par flexion, aux variations d'épaisseur de la végétation des arbres et arbustes fruitiers, de sorte que toutes les tiges agissent avec la même efficacité à tous les niveaux de la végétation pour en détacher les fruits, même si, pour un arbre ou arbuste donné, la végétation a une épaisseur variant de façon importante dans le sens de la hauteur. Ceci est dû non seulement à la grande flexibilité des tiges et à leur forme arquée, mais également au fait que les deux extrémités des tiges sont attachées à leurs points respectifs d'attache par des articulati ons et au moins dans une forme d'exécution de la présente invention, au fait que l'un des points d'attache est mobile dans une certaine mesure dans la direction longitudinale même lorsque le mécanisme de commande est immobile. Par rapport aux machines à vendanger connues, dans lesquelles les batteurs sont constitués par des tiges métalliques dont les deux extrémités sont fixées rigidement aux cadres de support oscillants (brevet FR 2 516 742 et 2 522 246), les tiges flexibles de la machine de récolte de la présente invention ont, individuellement, une faculté nettement plus grande d'adaptation aux variations d'épaisseur de la végétation, à tous les niveaux de celle-ci, donc une plus grande efficacité du point de vue de la récolte des fruits.

En outre, les essais effectués avec la machine de récolte de la présente invention ont montré que le pourcentage de fruits récoltés restait sensiblement le même lorsque la vitesse d'avance de la machine était augmentée et/ou que la fréquence d'oscillation du mecanisme de commande était diminuée par rapport aux valeurs usuelles de la vitesse d'avance et de la fréquence d'oscillation utilisées dans les machines à vendanger connues. On peut penser que ceci est dû au fait que la partie active des tiges flexibles a une longueur relativement importante. Quoiqu'il en soit, ce résultat est avantageux dans la mesure où l'augmentation de la vitesse d'avance de la machine permet de diminuer le temps nécessaire à la vendange, et dans la mesure où la diminution de la fréquence d'oscillation permet de réduire l'usure des pièces mécaniques en mouvement, tout en diminuant les dégâts causés aux plantes.

D'autres caractéristiques et avantages de la présente invention ressortiront au cours de la description qui va suivre de diverses formes d'exécution de l'invention, données à titre d'exemples en référence aux dessins annexés sur lesquels :

La figure 1 est une vue en élévation latérale, avec arrachement partiel, montrant une machine à vendanger équipée d'un ensemble de secouage conforme à la présente invention.

La figure 2 est une vue en élévation de face, avec arrachement partiel, de la machine à vendanger de la figure 1.

La figure 3 est une vue en élévation latérale, à plus grande échelle, montrant une partie de l'ensemble de secouage de la machine des figures 1 et 2.

La figure 4 montre schématiquement, en vue de dessus, l'ensemble de secouage de la machine des figures 1 et 2.

La figure 5 est une vue en perspective de la partie de l'ensemble de secouage montrée dans la figure 3.

La figure 6 montre comment les tiges flexibles de l'ensemble de secouage agissent sur un arbre ou arbuste fruitier, tel qu'un plant de vigne.

La figure 7 est une vue semblable à la figure 4 montrant une seconde forme d'exécution de l'ensemble de secouage.

La figure 8 est une vue en élévation latérale d'une partie de l'ensemble de secouage de la figure 7.

La figure 9 est une vue semblable aux figures 4 et 7, montrant une troisième forme d'exécution de l'ensemble de secouage.

La figure 10 est une vue en élévation latérale d'une partie de l'ensemble de secouage de la figure 9.

La figure 11 est une vue semblable à la figure 9, montrant une variante de réalisation de l'ensemble de secouage de la figure 9.

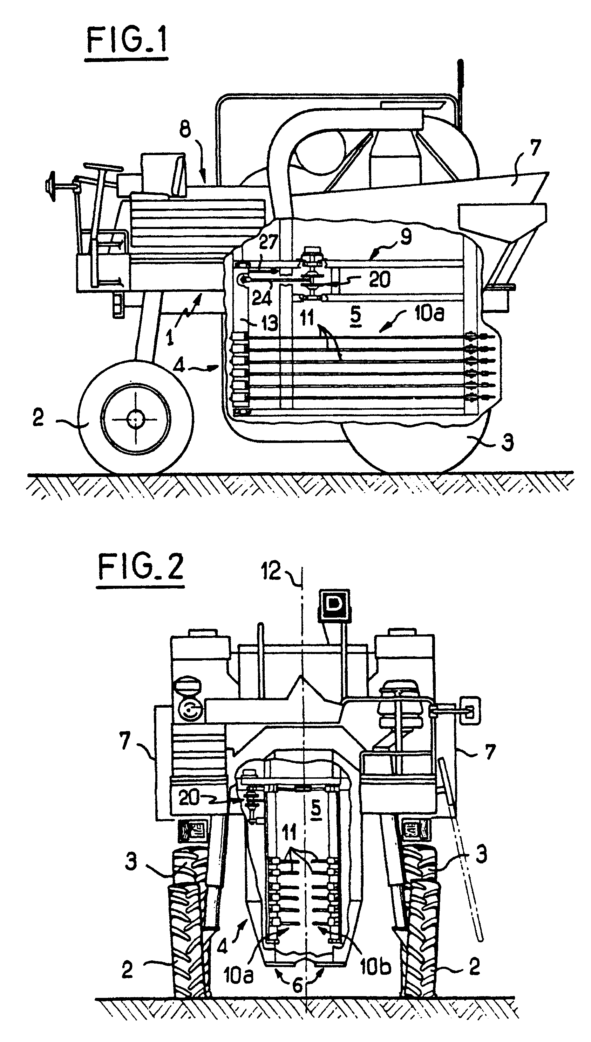

La machine de récolte représentée dans les figures 1 et 2 comprend, de façon connue, un châssis 1 équipé de roues avant 2 et de roues arrière 3 pour lui permettre de rouler sur le sol, et qui a la forme d'un portique de façon à pouvoir enjamber un rang de cultures. Le châssis 1 porte, de façon connue, un ensemble de récolte 4 comportant un ensemble de secouage 5 et deux convoyeurs élévateurs 6 pour recueillir les raisins détachés par l'ensemble de secouage 5 et pour les acheminer jusqu'à au moins un bac de stockage temporaire 7 (généralement deux bacs sont prévus respectivement de part et d'autre de la machine), ainsi qu'un moteur 8 fournissant la puissance nécessaire à l'entraînement des divers organes actifs de la machine et aussi à l'entraînement des roues de celles-ci dans le cas où il s'agit d'une machine autopropulsée.

L'ensemble de récolte 4 peut être fixé de manière permanente au châssis 1 de la machine ou il peut être réalisé sous la forme d'un ensemble amovible, fixé de manière détachable au châssis 1 pour pouvoir être remplacé par d'autres équipements ou accessoires, tels que équipement de pulvérisation, équipement de taille, équipement de travail du sol, etc. Selon le cas, l'ensemble de récolte 4 peut être supporté directement par le châssis 1 de la machine ou par un châssis auxiliaire 9. De façon connue, le châssis auxiliaire 9 peut être fixe par rapport au châssis 1 ou il peut être monté de manière pendulaire, à sa partie supérieure, autour d'un axe horizontal et longitudinal.

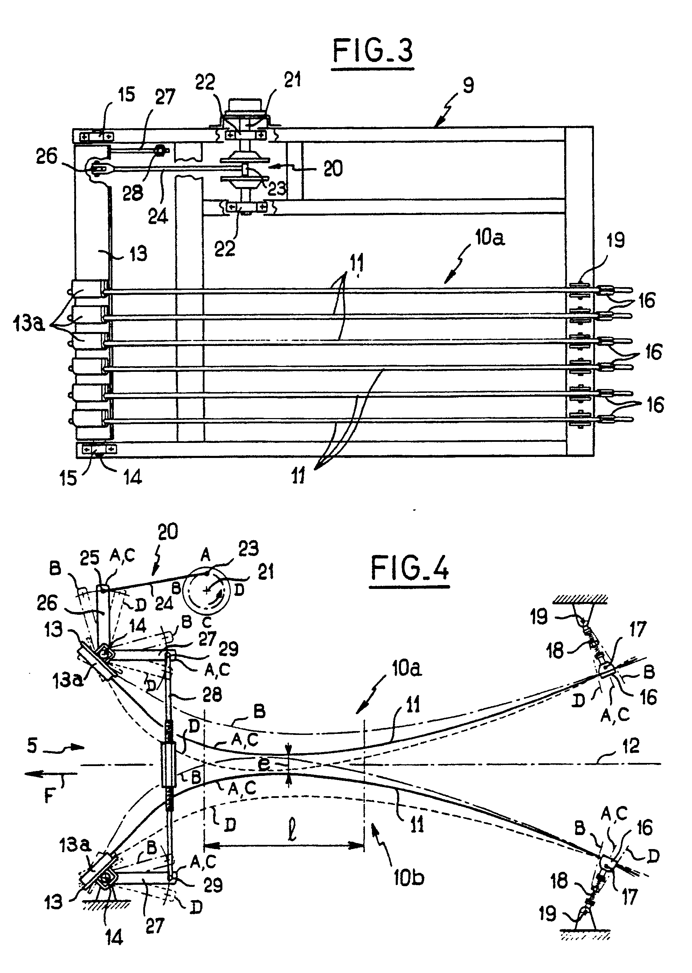

Comme cela est plus particulièrement visible dans la figure 2, l'ensemble de secouage 5, qui est plus spécialement concerné par l'invention, comporte deux jeux 10a et 10b d'organes secoueurs 11, les deux jeux 10a et 10b étant disposés en vis-à-vis respectivement de part et d'autre du plan médian longitudinal 12 de la machine. Comme cela est plus particulièrement visible dans la figure 3, chaque jeu, comme le jeu 10a, peut comporter par exemple six organes secoueurs 11, qui sont espacés verticalement les uns au-dessus des autres et qui s'étendent en gros horizontalement, bien qu'ils pourraient être aussi inclinés vers le bas de l'avant vers l'arrière de la machine. Bien que l'ensemble de secouage représenté sur les figures 1 à 3 comporte deux fois six organes secoueurs, il va de soi que l'invention n'est pas limitée à un tel nombre d'organes secoueurs, mais que ce nombre peut être plus petit ou plus grand selon le type d'arbres ou arbustes fruitiers et, pour un même type d'arbres ou arbustes fruitiers, selon la variété, le mode de conduite et la forme de la végétation des arbres ou arbustes fruitiers, ou encore selon que l'on désire secouer le tronc ou la végétation des arbres ou arbustes fruitiers.

Chaque organe secoueur 11 est constitué par une tige ayant une section très faible par rapport à sa longueur, en une matière très souple et déformable, telle que par exemple une résine polyester armée de fibre de verre, ou polyamide. Dans le cas de la vigne, de bons résultats ont été obtenus avec des tiges ayant une section circulaire de 25mm de diamètre et une longueur de 2m, en un polyamide type 6, dont le module d'élasticité E était égal à 3000 N/mm$^2$.

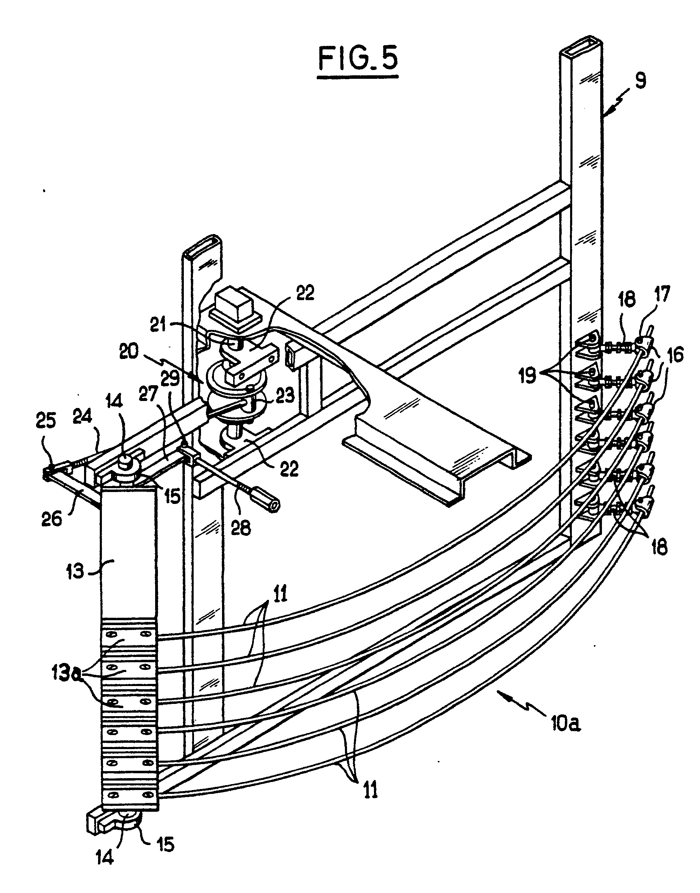

Comme cela est plus particulièrement visible dans les figures 4 et 5, chque tige 11 est courbée en forme d'arc. On peut utiliser des tiges précourbées au moment de leur fabrication ou des tiges rectilignes, qui sont courbées par flexion au moment de leur montage dans l'ensemble de secouage 5.

Comme cela est plus particuliérement visible dans les figures 3 à 5, l'une des extrémités de chaque tige 11 est fermement serrée dans une pince 13a fixée rigidement à une plaque verticale de support 13 (une plaque 13 étant prévue pour chacun des deux jeux 10a et 10b de tiges 11). Chaque plaque 13 est pourvue, a chacune de ses extrémités, d'un tourillon 14, d'axe vertical, monté à rotation dans un palier 15 fixé au châssis auxiliaire 9. L'autre extrémité de chaque tige 11 est fixée dans un support 16 qui est articulé par un axe vertical 17 sur l'une des extrémités d'une courte biellette 18, dont l'autre extrémité est articulée sur le châssis auxiliaire 9 par un axe vertical 19.

Un dispositif d'entraînement 20 à mouvement alternatif est relié à la plaque de support 13 de l'un des deux jeux 10a et 10b de tiges 11 pour faire osciller la plaque 13 autour de l'axe des tourillons 14. Le dispositif d'entraînement 20 peut être par exemple constitué par un système à bielle et manivelle, dont l'arbre 21 est monté à rotation dans des paliers 22 (figures 3 et 5) fixés au châssis auxiliaire 9. L'arbre 21 peut être entraîné en rotation par une transmission appropriée (non montrée) reliée à l'arbre de sortie d'un moteur, par exemple le moteur 8 de la machine de récolte. Sur le maneton 23 du système à bielle et manivelle 20 s'articule l'une des extrémités de la bielle 24, dont l'autre extrémité est articulée par une axe 25 sur un bras horizontal 26 fixé rigidement à la plaque de support 13 du jeu 10a de tiges 11. Deux autres bras horizontaux 27, s'étendant en gros parallèlement à l'axe médian longitudinal 12 de la machine, sont fixés rigidement aux deux plaques verticales 13, respectivement. Les bras 27 sont reliés l'un à l'autre par une tige horizontale et transversale d'accouplement 28, dont les extrémités sont articulées sur les extrémités libres des bras 27 par des axes 29, respectivement. De préférence, la tige d'accouplement 28 est réalisée sous la forme d'une tige de longueur réglable comme montré dans la figure 4, pour permettre un ajustment de l'écartement e entre les tiges flexibles 11.

Dans ce qui suit, on supposera que la direction d'avance de la machine de récolte est celle indiquée par la flèche F dans la figure 4. Dans ces conditions, les plaques de support 13 se trouvent à l'extrémité avant des tiges 11, tandis que les supports 16 et les biellettes 18 se trouvent à l'extrémité arrière des tiges 11, bien que la disposition inverse pourrait être adoptée aussi bien. Dans ces conditions, du fait de leur forme arquée, les tiges flexibles 11 des deux jeux 10a et 10b forment entre elles, de l'avant vers l'arrière de la machine, un convergent d'entrée pour les arbres et arbustes fruitiers, suivi d'une zone active de secouage ayant environ une longueur 1 (figure 4), elle-même suivie d'un divergent de sortie pour les arbres ou arbustes fruitiers.

Dans la figure 4, les lettres A, B, C et D indiquent les positions prises par les divers éléments de l'ensemble de secouage pour les quatre positions angulaires A,B,C et D du système d'entraînement à bielle et manivelle 20. D'après la figure 4, il est clair qu'au cours de la rotation du maneton 23 autour de l'axe de l'arbre 21, la courbure des tiges flexibles 11 va varier cycliquement autour d'une valeur moyenne de courbure, correspondant aux positions A et C, entre des valeurs minimale et maximale de courbure. On voit en outre que les tiges flexibles 11 du jeu 10a ont leur courbure minimale quand les tiges flexibles 11 du jeu 10b ont leur courbure maximale (position B) et, inversement, que les tiges 11 du jeu 10a ont leur courbure maximale quand les tiges 11 du jeu 10b ont leur courbure minimale (position D). On voit aussi que, pendant que les tiges 11 passent par flexion de leur position de courbure minimale à leur position de courbure maximale, leurs extrémités avant et arrière restent à une distance sensiblement constante de l'axe médian longitudinal 12, tandis que la zone active de secouage 1 se déplace transversalement en va-et-vient de part et d'autre dudit axe médian longitudinal 12. L'amplitude du mouvement transversal de la partie active des tiges flexibles 11 dépend des valeurs maximale et minimale de courbure, qui dépendent elle-même de l'excentricité du maneton 23 par rapport à l'axe de l'arbre 21. De préférence, l'excentricité du maneton 23 peut être réglée de façon connue, pour permettre un réglage de l'amplitude du mouvement transversal de la partie active des tiges flexibles 11. De préférence la bielle 24 est aussi réalisée sous la forme d'une tige de longueur réglable, pour permettre un ajustement de la position moyenne (position A,C) des tiges 11 de telle façon que, dans cette position, les parties actives des tiges des deux jeux 10a et 10b, respectivement, soient disposées symétriquement par rapport à l'axe médian longitutidinal 12.

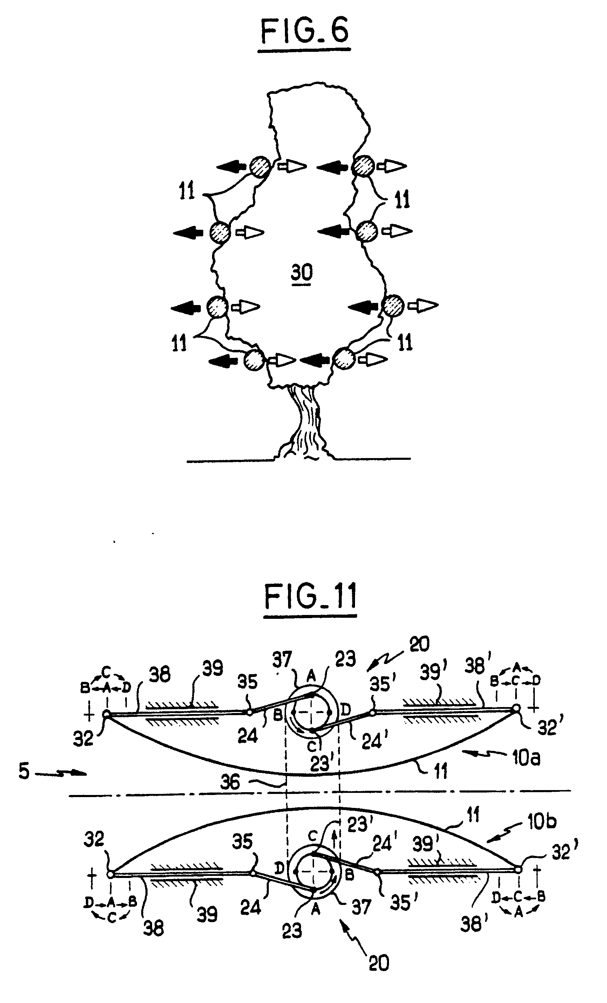

La figure 6 montre comment les tiges flexibles 11 de l'ensemble de secouage de la machine de récolte de la présente invention peuvent s'adapter individuellement à l'épaisseur de la végétation 30 d'un arbre ou arbuste frui tier tel qu'un plant de vigne. Ceci peut être expliqué de la manière suivante. Lorsqu'un plant de vigne arrive dans le convergent d'entrée entre les deux jeux 10a et 10b de tiges 11 la végétation applique aux tiges 11 des forces dont les composantes longitudinales sont transmises par lesdites tiges aux biellettes 18 qui pivotent vers l'arrière autour de leurs axes 19. En même temps, grâce à leur grande flexibilité, les tiges 11 se déforment élastiquement (leur courbure diminue) en s'écartant plus ou moins de l'axe médian longitudinal 12 selon l'épaisseur de la végétation au niveau de chaque tige 11. Par contre, pendant le secouage, les forces transversales appliquées aux tiges 11, qui sont dues à la résistance opposée par la végétation auxdites tiges 11, ont moins tendance à faire pivoter les biellettes 18 vers l'arrière autorur de leurs axes 19. Ceci est dû au fait que les biellettes 18 s'étendent en gros transversalement par rapport à l'axe médian longitudinal 12 et sont sensiblement perpendiculaires aux extrémités arrière des tiges 11. En conséquence, pendant le secouage, les tiges 11 se déforment relativement peu par flexion et leur amplitude de mouvement est transmise pratiquement intégralement à la végétation.

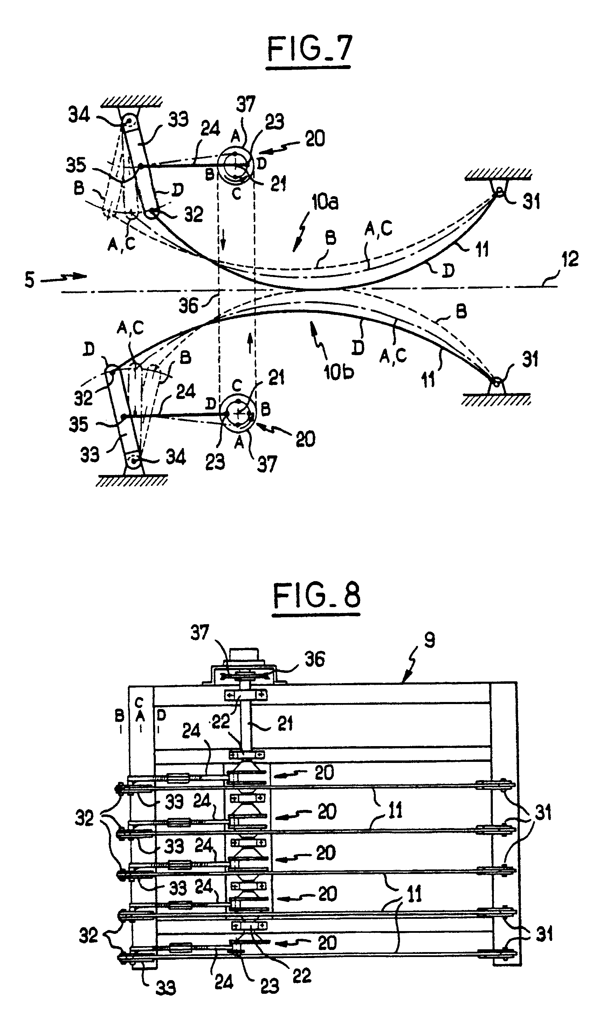

Les figures 7 et 8 montrent une autre forme d'exécution de l'ensemble de secouage 5, dans laquelle chaque tige flexible 11 a une de ses extrémités qui est articulée par un axe vertical 31 sur le châssis auxiliaire 9, et son autre extrémité qui est articulée par un axe vertical 32 sur l'une des extrémités d'une biellette horizontale 33, qui s'étend en gros transversalement par rapport à l'axe médian longitudinal 12 et dont l'autre extrémité est articulée par un axe 34 sur le châssis auxiliaire 9. A chaque biellette 33 est associé un dispositif d'entraînement 20 à mouvement alternatif permettant de faire osciller la biellette 33 autour de son axe 34 et, par suite, de faire varier par flexion la courbure des tiges flexibles 11 d'une manière semblable à celle déjà décrite à propos de la forme d'exécution montrée dans les figures 3 à 5. Chaque dispositif d'entraînement 20 peut être par exemple constitué par un système à bielle et manivelle, dont la bielle 24 est articulée par un axe 35 sur la biellette correspondante 33. Toutes les bielles 24 sont de préférence réalisées sous la forme de tiges de longueur réglable pour permettre un réglage individuel de la courbure initiale de chaque tige 11 et, par suite, un réglage de l'écartement des parties actives des tiges 11 des deux jeux 10a et 10b. De cette manière, l'écartement peut être réglé à une même valeur pour toutes les paires de tiges situées mutuellement en regard l'une de l'autre ou, si on le désire, à des valeurs différentes pour les différentes paires de tiges selon la forme générale des plants de vigne à vendanger.

Les manetons 23 de tous les systèmes d'entraînement à bielle et manivelle 20 associés aux tiges 11 du jeu 10a sont montés avec des calages angulaires identiques sur un premier arbre vertical commun d'entraînement 21. De même, les manetons 23 des systèmes d'entraînement à bielle et manivelle 20 associés aux tiges 11 du jeu 10b sont montés sur un deuxième arbre vertical commun d'entraînement 21 avec des calages angulaires identiques entre eux, mais décalés de 180° par rapport à ceux des manetons 23 du premier arbre 21 comme montré dans la figure 7. Les deux arbres 21 sont accouplés et synchronisés en rotation par une transmission comprenant une chaîne sans fin 36 et deux poules à chaîne 37 calées respectivement sur les arbres 21. L'un des deux arbres 21 peut être entraîné en rotation par une transmission appropriée (non montrée) reliée par exemple à l'arbre de sortie du moteur 8 de la machine de récolte. De préférence, l'excentricité de chaque maneton 23 par rapport à l'arbre 21 correspondant peut être réglé de façon connue, pour permettre un réglage individuel de l'amplitude du mouvement transversal de la partie active de chaque tige flexible 11. De cette manière, tous les manetons 23 peuvent être réglés avec la même

excentricité et, dans ce cas, toutes les tiges 11 auront la même amplitude de mouvement. Toutefois, si on le désire, pour chaque paire de tiges 11 se faisant mutuellement face, l'excentricité des manetons 23 peut être réglée à la même valeur, cette valeur étant cependant différente de celle des manetons associés aux autres paires de tiges 11. Dans ce dernier cas, chaque paire de tiges 11 peut avoir une amplitude de mouvement différente de celle des autres paires de tiges, ce qui peut être avantageux dans certains cas pour avoir une action de secouage différente à différents niveaux du tronc ou de la végétation des arbres et arbustes fruitiers.

Bien que dans la forme d'exécution représentée dans les figures 7 et 8, un système d'entraînement à bielle et manivelle 20 soit associé à chaque tige flexible 11, il va de soi que, dans une forme d'exécution simplifiée, les biellettes 33 associées aux tiges 11 du jeu 10a peuvent être reliées rigidement les unes aux autres et actionnées par un unique système d'entraînement à bielle et manivelle 20. De manière similaire, les bielles 33 associées aux tiges 11 du jeu 10b peuvent être reliées rigidement les unes aux autres et actionnées par un unique système d'entraînement à bielle et manivelle 20. En outre, au lieu d'être articulées par des axes 31 sur le châssis auxiliaire 9, les extrémités des tiges flexibles 11 opposées aux biellettes 33 peuvent être elles aussi articulées sur des biellettes identiques aux biellettes 33 et animées d'un mouvement d'oscillation, en opposition de phase par rapport à celui des biellettes 33, par des systèmes d'entraînement à mouvement alternatif, qui peuvent être les systèmes d'entraînement 20 eux-mêmes, auquel cas chacun d'eux est commun aux biellettes avant et arrière 33, ou des systèmes d'entraînement distincts des systèmes d'entraînement 20.

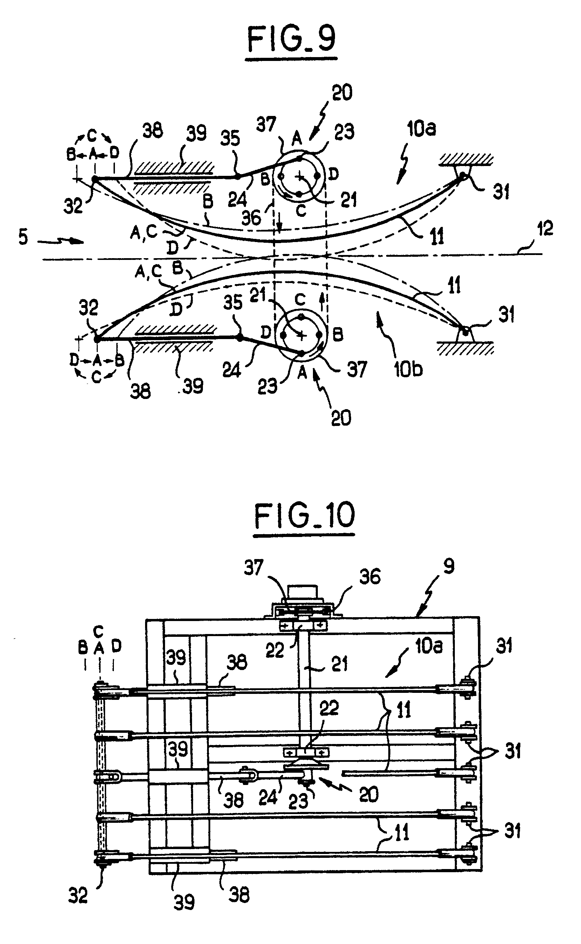

Les figures 9 et 10 montrent une autre forme d'exécution de l'ensemble de secouage 5, dans laquelle les éléments qui sont identiques ou qui jouent le même rôle que ceux qui sont montrés dans les figure 7 et 8, sont désignés par les mêmes numéros de référence, et ne seront donc pas décrits à nouveau en détail. L'ensemble de secouage des girues 9 et 19 diffère de celui des figures 7 et 8 en ce que les biellettes 33 des figures 7 et 8 sont remplacées par des tiges horizontales cylindriques 38 montées coulissantes dans des douilles cylindriques 39, qui sont fixées au châssis auxiliaire 9 et dont l'axe s'étend parallèlement à l'axe médian longitudinal 12. Pour chacun des deux jeux 10a et 10b de tiges flexibles 11, il est prévu au moins deux tiges coulissantes 38, par exemple trois tiges coulissantes comme cela est monté dans la figure 10. A l'une de leurs extrémités, les tiges coulissantes 38 supportent un axe vertical 32, qui est commun à toutes les tiges flexibles du jeu 10a (ou du jeu 10b) et sur lequel les tiges flexibles 11 s'articulent de façon à pouvoir pivoter indépendamment les unes des autres autour de l'axe 32. Un système d'entraînement 20 à bielle et manivelle est relié à l'une des trois tiges coulissantes 38, par exemple à celle du milieu, de manière à déplacer en va-et-vient l'axe 32 transversalement à lui-même dans une direction parallèle à l'axe médian longitudinal 12, ce qui a pour effet de modifier simultanément et de la même quantité la courbure de toutes les tiges flexibles 11 du jeu 10a (ou du jeu 10b) entre une valeur minimale de courbure et une valeur maximale de courbure, ces valeurs minimale et maximale dépendant de l'excentricité due maneton 23 du système d'entraînement 20. Comme précédemment, l'excentricité du maneton 23 de chacun des deux systèmes d'entraînement 20 associés respectivement aux jeux 10a et 10b de tiges flexibles 11 est réglable de façon connue pour permettre un réglage des valeurs minimale et maximale de courbure des tiges flexibles 11 et, par suite, un réglage de l'amplitude du mouvement transversal des parties actives desdites tiges flexibles. En outre, comme précédemment, les bielles 24 des deux systèmes d' entraînement 20 sont de préférence réalisées sous la forme de tiges de longueur réglable pour permettre un réglage de l'écartement entre les deux jeux 10a et 10b de tiges flexibles, dans la région de leurs parties actives.

Bien que dans le mode de réalisation de la figure 10 il soit prévu trois tiges coulissantes 38 pour chaque jeu de tiges flexibles 11, on peut prévoir seulement deux tiges coulissantes. Dans ce cas, il est de préférence prévu deux systèmes d'entraînement 20, dont les manetons 23 sont montés avec des calages angulaires identiques sur l'arbre d'entraînement 21 et dont les bielles 24 sont reliées respectivement aux tiges 38. Suivant une autre variante de réalisation, un système d'entraînement 20 peut être associé à chaque tige flexible 11 de chaque jeu 10a ou 10b suivant une disposition semblable à celle de la figure 8. Dans ce cas, chaque tige flexible 11 du jeu 10a (ou du jeu 10b) est articulée par son propre axe 32 (l'axe 32 n'est plus commun à toutes les tiges flexibles 11 du jeu 10a) sur l'une des extrémités d'une tige coulissante respective 38, les bielles 24 des systèmes d'entraînement 20 étant reliées à l'autre extrémité des tiges coulissante 38, respectivement. De cette façon, en réglant de manière appropriée l'excentricité des manetons 23 des systèmes d'entraînement 20 associés à chaque paire de tiges flexibles 11 se faisant mutuellement face il est possible de régler l'amplitude du mouvement transversal des parties actives de chacune desdites paires de tiges flexibles 11 indépendamment de celles des autres paires de tiges flexibles.

Dans la variante d'exécution représentée dans la figure 11, chaque tige flexible 11 de chacun des deux jeux 10a et 10b a 1'une de ses extrémités qui est articulée par un axe 32 sur l'une des extrémités d'une tige cylindrique 38, qui coulisse dans une douille cylindrique 39 et dont l'autre extrémité est articulée par un axe 35 sur l'une des extrémités d'une bielle 24, dont l'autre extrémité est articulée sur le maneton 23 d'un système d'entraînement 20 à mouvement alternatif, suivant une disposition semblable à celle montrée dans la figure 9. De même, l'autre extrémité de chaque tige flexible 11 est articulée par un axe 32' sur l'une des extrémités d'une tige cylindrique 38', qui coulisse dans une douille cylindrique 39' et dont l'autre extrémité est articulée par un axe 35' sur l'une des extrémités d'une bielle 24', dont l'autre extrémité est articulée sur un maneton 23', diamétralement opposé au maneton 23 du système d'entraînement 20.

Il va de soi que les formes d'exécution de la présente invention qui ont été décrites ci-dessus ont été données à titre d'exemple purement indicatif et nullement limitatif, et que de nombreuses modifications peuvent être facilement apportées par l'homme de l'art, sans pour autant sortir du cadre de l'invention telle qu'elle est définie dans les revendications suivantes. C'est ainsi notamment que, au lieu d'utiliser des systèmes à bielle et manivelle à titre de dispositif d'entraînement à mouvement alternatif, on peut utiliser aussi bien des vérins hydrauliques à double effet. En outre, bien que la présente invention ait été plus particulièrement décrite à propos d'une machine de récolte autopropulsée, il va de soi que l'invention s'applique tout aussi bien à des machines de récolte attelées à un tracteur.

## Revendications

1. Machine pour la récolte de fruits, baies et similaires portés par des arbres et arbustes fruitiers plantés en ligne, comprenant un châssis enjambeur (1,9) mobile à travers champs, et un ensemble de secouage (5) monté sur le châssis et comportant au moins une paire d'organes secoueurs (11) de forme allongée, qui s'étendent sensiblement horizontalement dans la direction de l'axe médian longitudinal (12) de la machine et qui sont espacés transversalement l'un de l'autre et situés respectivement de part et d'autre dudit axe médian longitudinal, chaque organe secoueur (11) étant constitué par une tige dont les deux extrémités sont reliées à un support et qui a une forme telle qu'elle définit avec l'autre tige, de l'avant vers l'arrière de la machine, un convergent d'entrée, une zone active de secouage et un divergent de sortie pour les arbres et arbustes fruitiers, et un mécanisme de commande (20) relié aux tiges (11) pour les animer en synchronisme d'un mouvment de va-et-vient dans une direction transversale par rapport audit axe médian longitudinal, caractérisée en ce que les tiges (11) sont en une matière ayant une grande flexibilité et sont courbées en forme d'arc, dont la convexité est tournée vers l'axe médian longitudinal (12) de la machine, en ce que les extrémités des tiges flexibles (11) sont maintenues à une distance sensiblement constante dudit axe médian longitudinal, et en ce que le mécanisme de commande (2) est agencé pour faire varier cycliquement la courbure des tiges flexibles autour d'une valeur moyenne de courbure, de telle façon que l'une desdites tiges flexibles ait une valeur maximale de courbure quand l'autre tige flexible a une valeur minimale de courbure et vice-versa.

2. Machine selon la revendication 1, caractérisée en ce que chaque tige flexible (11) a une de ses extrémités qui est articulée à un point fixe (14 ou 31) de la machine, et son extrémité qui est attachée à un point (17 ou 32) mobile dans une direction sensiblement parallèle à l'axe médian longitudinal (12) de la machine.

3. Machine selon la revendication 1, caractérisée en ce que chaque tige flexible (11) a ses deux extrémités qui sont attachées à des points (32, 32') mobiles dans une direction sensiblement parallèle à l'axe médian longitudinal (12) de la machine.

4. Machine selon la revendication 2, caractérisée en ce que chaque tige flexible (11) a une de ses extrémités qui est fixée rigidement à un support (13a,13) monté pivotant sur le châssis (1,9) autour d'un premier axe vertical (14), et son autre extrémité qui est articulée par un second axe vertical (17) sur l'une des extrémités d'une courte biellette horizontale (18), qui s'étend sensiblement transversalement par rapport à l'axe médian longitudinal (12) de la machine et dont l'autre extrémité est articulée sur le châssis (1,9) par un troisième axe vertical (19), et en ce que le mécanisme de commande (20) comprend un dispositif d'entraînement à mouvement alternatif (21, 23, 24), qui est relié au support (13a,13) de l'une des deux tiges flexibles (11), un premier bras horizontal (27) qui est fixé rigidement au support (13a,13) de l'une des deux tiges flexibles (11) et qui s'étend en gros parallèlement a l'axe médian longitudinal (12) de la machine, un second bras horizontal (27), qui est fixé rigidement au support (13a,13) de l'autre tige flexible (11) et qui est en gros parallèle au premier bras (27), et une tige horizontale et transversale d'accouplement (28) dont les extrémités sont articulées sur les extrémités libres des premier et second bras (27), respectivement.

5. Machine selon la revendication 4, caractérisée en ce que la tige d'accouplement (28) a une longueur réglable.

6. Machine selon la revendication 4 ou 5, caractérisée en ce que le dispositif d'entraînement a mouvement alternatif (21, 23, 24), est constitué par un système à bielle et manivelle, dont la bielle (24) est articulée sur un troisième bras (26) fixé rigidement au support (13a,13) de l'une des deux tiges flexibles (11).

7. Machine selon l'une quelconque des revendications 4 à 6, dans laquelle l'ensemble de secouage (5) comprend deux jeux (10a et 10b) de tiges flexibles (11) disposés respectivment de part et d'autre de l'axe médian longitudinal (12) de la machine, les tiges flexibles (11) de chaque jeu (10a ou 10b) étant espacées verticalement et situées dans des plans sensiblement horizontaux, et dans laquelle le support (13a,13) pivotant autour du premier axe vertical (14) s'étend verticalement et est commun à toutes les tiges flexibles (11) du jeu correspondant (10a ou 10b) de tiges, caractérisée en ce que l'autre extrémité de chaque tige flexible (11) du jeu de tiges est reliée au châssis (1,9) par une courte biellette respective (18).

8. Machine selon la revendication 2, caractérisée en ce que chaque tige flexible (11) a une de ses extrémités qui est articulée par un premier axe vertical (31) sur le châssis (1,9) de la machine, et son autre extrémité qui est articulée par un second axe vertical (32) sur l'une des extrémités d'une biellette horizontale (33) qui s'étend sensiblement transversalement par rapport à l'axe médian longitudinal (12) de la machine et dont l'autre extrémité est articulée par un troisième axe vertical (34) sur le châssis (1,9) de la machine, et en ce que le mécanisme de commande (20) comprend un premier et un second dispositifs d'entraînement à mouvement alternatif (20), qui sont reliés respectivement aux biellettes (33) associées respectivement aux deux tiges flexibles (11), pour faire osciller lesdites biellettes (33) respectivement autour des troisièmes axes verticaux (34), les premier et second dispositifs d'entraînement (20) étant actionnés en opposition de phase.

9. Machine selon la revendication 8, caractérisée en ce que chacun des premier et second dispositifs d'entraînement (20) est constitué par un système à bielle et manivelle, dont la bielle (24) est reliée à l'une desdites biellettes (33), les manivelles ou manetons (23) des deux systèmes à bielle et manivelle étant décalés angulairement de 180° et accouplés par une transmission à poulies (37) et à chaîne sans fin (36).

10. Machine selon la revendication 9, dans laquelle l'ensemble de secouage (5) comprend deux jeux (10a et 10b) de tiges flexibles (11) disposés respectivement de part et d'autre de l'axe médian longitudinal (12) de la machine, les tiges flexibles (11) de chaque jeu étant espacées verticalement et situées dans des plans sensiblement horizontaux, caractérisée en ce qu'à chaque tige flexible (11) de chacun des deux jeux (10a et 10b) de tiges est associée une biellette horizontale et transversale respective (33) et un système à bielle et manivelle respectif (20), les manivelles ou manetons (23) associés à un jeu (10a) de tiges flexibles (11) situées d'un côté de l'axe médian longitudinal (12) étant montés avec des calages angulaires identiques sur un premier arbre vertical commun d'entraînment (21) et les manivelles ou manetons (23) associés à l'autre jeu (10b) de tiges flexibles situées de l'autre côté de l'axe médian longitudinal étant montés sur un second arbre vertical commun d'entraînement (21) avec des calages angulaires identiques entre eux, mais décalés de 180° par rapport à ceux des manivelles ou manetons (23) du premier arbre (21), les deux arbres étant accouplés par ladite transmission à poulies (37) et à chaîne sans fin (36).

11. Machine selon la revendication 2, caractérisée en ce que chaque tige flexible (11) a une de ses extrémités qui est articulée par un premier axe vertical (31) sur le châssis (1,9) de la machine, et son autre extrémité qui est articulée par un second axe vertical (32) sur l'une des extrémités d'une tige horizontale (38) qui est montée coulissante dans le châssis (1,9) de la machine dans une direction parallèle à l'axe médian longitudinal (12), et en ce que le mécanisme de commande (20) comprend un premier et un second dispositifs d'entraînement à mouvement alternatif (20), qui sont reliés respectivement aux autres extrémités des tiges coulissantes (38) associées respectivement aux tiges flexibles (11), les premier et second dispositifs d'entraînement (20) étant actionnés en opposition de phase.

12. Machine selon la revendication 11, caractérisée en ce que chacun des premier et second dispositifs d'entraînement (20) est constitué par un système à bielle et manivelle, dont la bielle (24) est reliée à l'une desdites tiges coulissantes (38), les manivelles ou manetons (23) des deux systèmes à bielle et manivelle étant décalés angulairement de 180° et accouplés par une transmission à poulies (37) et à chaîne sans fin (36).

13. Machine selon la revendication 12, dans laquelle l'ensemble de secouage (5) comprend deux juex (10a et 10b) de tiges flexibles (11), disposés respectivement de part et d'autre de l'axe médian longitudinal (12) de la machine, les tiges flexibles (11) de chaque jeu étant espacées verticalement et situées dans des plans sensiblement horizontaux, caractérisée en ce que les tiges flexibles (11) de chacun des deux jeux (10a et 10b) ont une extrémité articulée sur un axe vertical (32) commun aux tiges flexibles (11) du jeu correspondant de tiges, ledit axe commun (32) étant supporté par les extrémités correspondantes d'au moins deux tiges horizontales parallèles (38) montées coulissantes dans le châssis (1,9) de la machine dans une direction parallèle à l'axe médian longitudinal (12), et en ce qu'un système à bielle et manivelle (20) est relié à l'autre extrémité de l'une au moins des deux tiges coulissantes (38) associées audit axe commun (32).

14. Machine selon l'une quelconque des revendications 6,9,10,12 et 13, caractérisée en ce que la bielle (24) de chaque système à bielle et manivelle (20) a une longueur réglable.

15. Machine selon l'une quelconque des revendications 6,9,10,12,13 et 14, caractérisée en ce que la manivelle ou maneton (23) de chaque système à bielle et manivelle (20) a une excentricité réglable.

16. Machine selon l'une quelconque des revendications 1 à 15, caractérisée en ce que les tiges flexibles ont une longueur d'environ 2m et une section transversale circulaire d'un diamètre d'environ 25mm.

17. Machine selon l'une quelconque des revendications 1 à 16, caractérisée en ce que les tiges flexibles (11) sont en un polyamide ayant un module d'élasticité d'environ 3000 N/mm$^2$.

## Claims

1. A machine for the harvesting of fruit, berries and the like borne by fruit trees and bushes planted in rows, comprising a straddling chassis (1,9) which can move across fields and a shaking assembly (5) mounted on the chassis and including at least one pair of shaking members (11) of elongated shape which extend substantially horizontally in the direction of the longitudinal median axis (12) of the machine and which are spaced transversely from one another and located on either side of the said longitudinal median axis respectively, each shaking member (11) consisting of a rod of which the two ends are connected to a support and which has a shape such that together with the other rod it defines, from front to rear of the machine, a convergent inlet, an active shaking zone and a divergent outlet for fruit trees and bushes, and a control mechanism (20) connected to the rods (11) to cause these to move back and forth synchronously in a transverse direction with respect to the said longitudinal median axis, characterised in that the rods (11) are of a material which has great flexibility and are curved in the form of an arc, the convex side of which faces the longitudinal median axis (12) of the machine, in that the ends of the flexible rods (11) are held at a substantially constant distance from the said longitudinal median axis and in that the control mechanism (20) is designed so that the curvature of the flexible rods is varied cyclically about a mean curvature value in such a way that one of the said flexible rods has a maximum value of curvature when the other flexible rod has a minimum value of curvature and vice versa.

2. A machine according to claim 1, characterised in that each flexible rod (11) has its one end articulated to a fixed point (14 or 31) on the machine, and its other end attached to a point (17 or 32) which can move in a direction substantially parallel to the longitudinal median axis (12) of the machine.

3. A machine according to claim 1, characterised in that each flexible rod (11) has its two ends attached to points (32, 32') which can move in a direction substantially parallel to the longitudinal median axis (12) of the machine.

4. A machine according to claim 2, characterised in that each flexible rod (11) has its one end fixed rigidly to a support (13a, 13) which is pivotally mounted on the chassis (1, 9) around a first vertical axis (14) and its other end articulated about a second vertical axis (17) to one of the ends of a short horizontal rod (18) which extends substantially transversely with respect to the longitudinal median axis (12) of the machine and whose other end is articulated to the chassis (1, 9) by a third vertical axis (19), and in that the control mechanism (20) incorporates means for causing alternating movement (21, 23, 24) which are connected to the support (13a, 13) of one of the two flexible rods (11), a first horizontal arm (27) which is rigidly attached to the support (13a, 13) of one of the two flexible rods (11) and which extends largely parallel to the longitudinal median axis (12) of the machine, a second horizontal arm (27) which is rigidly attached to the support (13a, 13) of the other flexible rod (11) and which is largely parallel to the first arm (27), and a horizontal and transverse coupling rod (28) whose ends are articulated to the free ends of the first and second arms (27) respectively.

5. A machine according to claim 4, characterised in that the coupling rod (28) is of adjustable length.

6. A machine according to claim 4 or 5, characterised in that the means for causing alternating movement (21, 23, 24) consist of a crank and connecting rod system in which the connecting rod (24) is articulated to a third arm (26) rigidly attached to the support (13a, 13) of one of the two flexible rods (11).

7. A machine according to any one of claims 4 to 6, in which the shaking assembly (5) comprises two sets (10a and 10b) of flexible rods (11) placed on either side respectively of the longitudinal median axis (12) of the machine, the flexible rods (11) in each set (10a or 10b) being spaced vertically and being located in substantially horizontal planes, and in which the support (13a, 13) which pivots about the first vertical axis (14) extends vertically and is common to all the flexible rods (11) in the corresponding set (10a or 10b) of rods, characterised in that the other end of each flexible rod (11) in the set of rods is connected to the chassis (1, 9) by a corresponding short rod (18).

8. A machine according to claim 2, characterised in that each flexible rod (11) has its one end articulated about a first vertical axis (31) to the chassis (1, 9) of the machine and its other end articulated through a second vertical axis (32) to one of the ends of a horizontal bar (33) which extends substantially transversely with respect to the longitudinal median axis (12) of the machine and of which the other end is articulated through a third vertical axis (34) to the chassis (1, 9) of the machine, and in that the control mechanism (20) includes a first and a second means of causing alternating movement (20) which are connected respectively to the short rods (33) associated with the two flexible rods (11) respectively in order to cause the said short rods (33) to oscillate about the third vertical axes (34) respectively, the first and second drive means (20) being operated in opposite phase.

9. A machine according to claim 8, characterised in that each of the first and second drive means (20) consist of a crank and connecting rod system, of which the connecting rod (24) is connected to one of the said short rods (33), the cranks or crank members (23) of the two crank and connecting rod systems having an angular offset of 180° and being coupled by means of a pulley transmission (37) and an endless chain (36).

10. A machine according to claim 9, in which the shaking assembly (5) includes two sets (10a and 10b) of flexible rods (11) placed on either side respectively of the longitudinal median axis (12) of the machine, the flexible rods (11) in each set being spaced vertically and being located in substantially horizontal planes, characterised in that a horizontal and transverse short rod (33) respectively and a corresponding crank and connecting rod system (20) is associated with each flexible rod (11) of each of the two sets (10a and 10b) of rods, the cranks or crank members (23) associated with one set (10a) of flexible rods (11) located on one side of the longitudinal median axis (12) being mounted with identical angular offsets on a first common vertical drive shaft (21) and the cranks or crank members (23) associated with the other set (10b) of flexible rods located on the other side of the longitudinal median axis being mounted on a second common vertical drive shaft (21) with identical angular offsets, but offset by 180° with respect to those of the cranks or crank members (23) of the first shaft (21), the two shafts being coupled together by the said pulley transmission (37) and endless chain (36).

11. A machine according to claim 2, characterised in that each flexible rod (11) has its one end articulated through a first vertical axis (31) to the chassis (1, 9) of the machine and its other end articulated through a second vertical axis (32) to one of the ends of a horizontal rod (38) which is slidably mounted in the chassis (1, 9) of the machine in a direction parallel to the longitudinal median axis (12), and in that the control mechanism (20) includes a first and a second means causing alternating movement (20) which are connected respectively to the other ends of the sliding rods (38) associated with the flexible rods (11) respectively, the first and second drive means (20) being operated in opposite phase.

12. A machine according to claim 11, characterised in that each of the first and second drive means (20) consists of a crank and connecting rod system, in which the connecting rod (24) is connected to one of the said sliding rods (38), the cranks or crank members (23) of the two crank and connecting rod systems being angularly offset by 180° and being coupled together by a pulley transmission (37) and an endless chain (36).

13. A machine according to claim 12, in which the shaking assembly (5) includes two sets (10a and 10b) of flexible rods (11) placed on either side respectively of the longitudinal median axis (12) of the machine, the flexible rods (11) in each set being spaced vertically and being located in substantially horizontal planes, characterized in that the flexible rods (11) in each of the two sets (10a and 10b) have one end articulated through a common vertical axis (32) to the flexible rods (11) of the corresponding set of rods, the said common axis (32) being supported by the corresponding ends of at least parallel horizontal rods (38) slidably mounted in the chassis (1, 9) of the machine in a direction parallel to the longitudinal median axis (12), and in that a crank and connecting rod system (20) is connected to the other end of at least one of the two sliding rods (38) associated with the said common axis (32).

14. A machine according to any one of claims 6, 9, 10, 12 and 13, characterized in that the connecting rod (24) of each crank and connecting rod system (20) is of adjustable length.

15. A machine according to any one of claims 6, 9, 10, 12, 13 and 14, characterized in that the crank or crank member (23) of each crank and connecting rod system (20) is of adjustable eccentricity.

16. A machine according to any one of claims 1 to 15, characterized in that the flexible rods have a length of approximately 2 m and a circular transverse cross-section of diameter approximately 25 mm.

17. A machine according to any one of claims 1 to 16, characterized in that the flexible rods (11) are of polyamide having an elastic modulus of approximately 3000 N/mm².

## Ansprüche

1. Erntemaschine für Früchte, Beeren und dergleichen von in Reihen gepflanzten Obstbäumen und Sträuchern, mit einen hochliegenden, feldgängigen Chassis (1, 9) und einer darauf montierten Rütteleinrichtung (5) mit mindestens zwei länglichen Rüttelorganen (11), die im wesentlichen horizontal in Richtung der Längsmittelachse (12) der Maschine verlaufen, voneinander in Querrichtung beabstandet sind und sich beidseits der Längsmittelachse befinden, wobei jedes Rüttelorgan (11) aus einer Stange besteht, deren beide Enden mit einer Halterung verbunden sind und die so geformt ist, daß sie mit der anderen Stange von vorne nach hinten bezogen auf die Maschine, einen konvergierenden Eintritt, eine aktive Rüttelzone und einen divergierenden Austritt für die Fruchtbäume und -büsche bildet, und mit den Stangen (11) eines Steuermechanismus (20) verbunden ist, der ihnen eine synchron hin- und hergehende Bewegung quer zur Längsmittelachse verleiht, dadurch gekennzeichnet, daß die Stangen (11) aus einem Werkstoff hoher Biegsamkeit bestehen und den Verlauf eines Bogens haben, dessen konvexer Teil der Längsmittelachse (12) der Maschine zugewandt ist, daß die Enden der Stangen (11) in einem etwa konstanten Abstand von der Längsmittelachse gehalten sind, und daß der Steuermechanismus (20) so betätigt wird, daß sich die Durchbiegung der biegsamen Stangen zyklisch um einen mittleren Wert ändert, derart, daß die Durchbiegung der einen Stange einen Maximalwert hat, während diejenigen der anderen Stange einen Minimalwert hat und umgekehrt.

2. Maschine nach Anspruch 1, dadurch gekennzeichnet, daß jede biegsame Stange (11) mit einem ihrer Enden an einem festen Punkt (14 oder 31) der Maschine gelenkig befestigt ist und mit ihrem anderen Ende in einem Punkt (17 oder 32) festgelegt ist, der in einer im wesentlichen zu der Längsmittelachse (12) der Maschine parallelen Richtung beweglich ist.

3. Maschine nach Anspruch 1, dadurch gekennzeichnet, daß jede biegsame Stange (11) mit ihren Enden an Punkten (32, 32') festgelegt ist, die in einer im wesentlichen zu der Längsmittelachse (12) der Maschine parallelen Richtung beweglich sind.

4. Maschine nach Anspruch 2, dadurch gekennzeichnet, daß jede biegsame Stange (11) mit ihrem einen Ende fest mit einem Träger (13a, 13) verbunden ist, der um eine erste vertikale Achse (14) schwenkbar an dem Chassis (1, 9) montiert ist, und mit ihrem anderen Ende um eine zweite vertikale Achse (17) schwenkbar an dem einen Ende eines kurzen waagerechten Schwingarmes (18) befestigt ist, der sich im wesentlichen quer zu der Längsmittelachse (12) der Maschine erstreckt und dessen anderes Ende um einer dritte vertikale Achse (19) schwenkbar mit dem Chassis (1, 9) verbunden ist, und daß der Steuermechanismus (20) eine Antriebsvorrichtung (21, 23, 24) mit alternierender Bewegung umfaßt, die mit dem Träger (13a, 13) einer der beiden biegsamen Stangen (11) verbunden ist, weiterhin einen ersten Horizontalarm (27), der fest mit dem Träger(13a, 13) einer der beiden biegsamen Stangen (11) verbunden ist und sich im wesentlichen parallel zur Längsmittelachse (12) der Maschine erstreckt, außerdem einen zweiten Horizontalarm (27), der fest mit dem Träger (13a, 13) der anderen flexiblen Stange (11) verbunden ist und sich im wesentlichen parallel zu dem ersten Horizontalarm (27) erstreckt, und schließlich eine horizontale, quer verlaufende Kupplungsstange (28), deren Enden an die freiene Enden des ersten bzw. des zweiten Horizontalarmes (27) angelenkt sind.

5. Maschine nach Anspruch 4, dadurch gekennzeichnet, daß die Kupplungsstange (28) in der Länge einstellbar ist.

6. Maschine nach Anspruch 4 oder 5, dadurch gekennzeichnet, daß die Antriebsvorrichtung für die alternierende Bewegung (21, 23, 24) aus einem Pleuel- und Kurbelsystem besteht, dessen Pleuelstange (24) an einen dritten Arm (26) angelenkt ist, der fest mit dem Träger (13a, 13) einer der beiden biegsamen Stangen (11) verbunden ist.

7. Maschine nach einem der Ansprüche 4 bis 6, bei der die Rütteleinrichtung (5) zwei Sätze (10a und 10b) biegsamer Stangen (11) umfaßt, die auf der einen bzw. der anderen Seite der Längsmittelachse (12) der Maschine angeordnet sind, wobei die biegsamen Stangen (11) jedes Satzes (10a oder 10b) vertikal voneinander beabstandet sind und in im wesentlichen waagerechten Ebenen liegen und wobei der um die erste vertikale Achse (14) schwenkende Träger (13a, 13) vertikal verläuft und allen biegsamen Stangen (11) des entsprechenden Satzes (10a oder 10b) an Stangen gemeinsam ist, dadurch gekennzeichnet, daß das andere Ende jeder biegsamen Stange (11) des Stangensatzes mit dem Chassis (1, 9) jeweils über einen kurzen Schwingarm (18) verbunden ist.

8. Maschine nach Anspruch 2, dadurch gekennzeichnet, daß jede biegsame Stange (11) mit einem ihrer Enden um eine erste Vertikalachse (31) schwenkbar mit dem Chassis (1, 9) der Maschine verbunden ist und mit ihrem anderen Ende schwenkbar um eine zweite Vertikalachse (32) mit dem einen Ende eines horizontalen Schwingarmes (33) verbunden ist, der sich im wesentlichen quer zu der Längsmittelachse (12) der Maschine erstreckt und dessen anderes Ende über eine dritte Vertikalachse (34) mit dem Chassis (1, 9) der Maschine verbunden ist, und daß der Steuermechanismus (20) eine erste und eine zweite Antriebsvorrichtung (20) mit alternierender Bewegung umfaßt, welche Antriebsvorrichtungen jeweils mit Schwingarmen (33) verbunden sind, die den zwei biegsamen Stangen (11) zugeordnet sind, so daß diese Schwingarme (33) jeweils um dritte Vertikalachsen (34) schwingen, wobei die erste und die zweite Antriebsvorrichtung (20) gegenphasig betätigt werden.

9. Maschine nach Anspruch 8, dadurch gekennzeichnet, daß die erste und die zweite Antriebsvorrichtung (20) jeweils aus einem Pleuel- und Kurbelsystem bestehen, dessen Pleuelstange (24) mit einem der Schwingarme (33) verbunden ist, und die Kurbeln oder Kurbelzapfen (23) der beiden Pleuel- und Kurbelsysteme winkelmäßig um 180° versetzt angeordnet und durch eine Transmission mit Rädern (37) und einer endlosen Kette (36) gekuppelt sind.

10. Maschine nach Anspruch 9, bei der die Rütteleinrichtung (5) zwei Sätze (10a und 10b) biegsamer Stangen (11) umfaßt, die auf der einen bzw. der anderen Seite der Längsmittelachse (12) der Maschine angeordnet sind und die biegsamen Stangen (11) jedes Satzes vertikal voneinander beabstandet sind und in im wesentlichen horizontalen Ebenen liegen, dadurch gekennzeichnet, daß jeder biegsamen Stange (11) jedes der zwei Sätze (10a und 10b) von Stangen jeweils ein horizontaler und quer verlaufender Schwingarm (33) und jeweils ein Pleuel- und Kurbelsystem (20) zugeordnet ist, wobei die Kurbeln oder Kurbelzapfen (23), die jeweils einem Satz (10a) biegsamer Stangen (11) zugeordnet sind und auf der gleichen Seite der Längsmittelachse (12) liegen, um übereinstimmende Winkelbeträge versetzt auf einer ersten, gemeinsamen, vertikalen Antriebswelle (21) montiert sind und die Kurbeln oder Kurbelzapfen (23) , die dem anderen Satz (10b) biegsamer Stangen zugeordnet sind, und sich auf der anderen Seite der Längsmittelachse befinden, auf einer zweiten, gemeinsamen, vertikalen Antriebs - welle (21) um übereinstimmende Winkelbeträge gegeneinander versetzt, jedoch um 180° in bezug auf diejenigen der Kurbeln oder Kurbelstangen (23) der ersten Welle (21) versetzt angeordnet sind, und daß die zwei Wellen über die Transmission mit Rädern (37) und endloser Kette (36) miteinander gekuppelt sind.

11. Maschine nach Anspruch 2, dadurch gekennzeichnet, daß jede biegsame Stange (11) mit einem ihrer Enden schwenkbar um eine erste Vertikalachse (31) an dem Chassis (1, 9) der Maschine befestigt ist und mit ihrem anderen Ende schwenkbar um eine zweite Vertikalachse (32) an einem der Enden einer horizontalen Stange (38) befestigt ist, die an dem Chassis (1, 9) der Maschine gleitfähig in einer Richtung parallel zur Längsmittelachse (12) montiert ist, und daß der Steuermechanismus (20) eine erste und eine zweite Antriebsvorrichtung (20) mit alternierender Bewegung umfaßt und diese Antriebsvorrichtungen jeweils mit den anderen Enden der gleitfähigen Stangen (38) , die jeweils den biegsamen Stangen (11) zugeordnet sind, verbunden sind, wobei die erste und die zweite Antriebsvorrichtung (20) gegenphasig betätigt werden.

12. Maschinen nach Anspruch 11, dadurch gekennzeichnet, daß die erste und die zweite Antriebsvorrichtung (20) jeweils aus einem Pleuel- und Kurbelsystem bestehen, dessen Pleuel (24) mit einer der gleitfähigen Stangen (38) verbunden ist, während die Kurbeln oder Kurbelzapfen (23) der beiden Pleuel- und Kurbelsysteme winkelmäßig um 180° versetzt sind und miteinander über eine Transmisson mit Rädern (37) und endloser Kette (36) gekuppelt sind.

13. Maschine nach Anspruch 12, wobei die Rüttelvorrichtung (5) zwei Sätze (10a und 10b) biegsamer Stangen (11) umfaßt, die auf der einen bzw. der anderen Seite der Längsmittelachse (12) derMaschine angeordnet sind, und die biegsamen Stangen (11) jedes Satzes vertikal voneinander beabstandet sind und in im wesentlichen waagerechten Ebenen liegen, dadurch gekennzeichnet, daß die biegsamen Stangen jedes Satzes (10a und 10b) mit ihrem einen Ende schwenkbar auf einer den biegsamen Stangen (11) des entsprechenden Satzes von Stangen gemeinsamen Vertikalachse (32) sitzen, daß die gemeinsame Vertikalachse (32) an den entsprechenden Enden von wenigstens zwei parallelen horizontalen Stangen (38) gelagert sind, die gleitfähig an dem Chassis (1,9) der Maschine in einer Richtung parallel zur Längsmittelachse (12) montiert sind, und daß ein Pleuel- und Kurbelsystem (20) mit dem anderen Ende von wenigstens einer der zwei gleitfähigen Stangen (38) , die der gemeinsamen Vertikalachse 32 zugeordnet sind, verbunden ist.

14. Maschine nach einem der Ansprüche 6, 9, 10, 12 und 13, dadurch gekennzeichnet, daß der Pleuel (24) jedes Pleuel- und Kurbelsystems (20) längeneinstellbar ist.

15. Maschine nach einem der Ansprüche 6, 9, 10, 12, 13 und 14 dadurch gekennzeichnet, daß die Kurbel oder der Kurbelzapfen (23) jedes Pleuel- undKurbelsystems (20) eine einstellbare Exzentrizität hat.

16. Maschine nach einen der Ansprüche 1 bis 15, dadurch gekennzeichnet, daß die biegsamen Stangen eine Länge von etwa zwei Meter und einen kreisförmigen Querschnitt mit einem Durchmesser von etwa 25 mm haben.

17. Maschine nach einem der Ansprüche 1 bis 16, dadurch gekennzeichnet , daß die biegsamen Stangen (11) aus einem Polyamid mit einem Elastizitätsmodul von etwa 3000 N/mm$^2$ bestehen.

FIG.1

FIG.2

## FIG_3

## FIG_4

# FIG.5

# FIG.6

# FIG.11

EP 0 267 829 B1

# FIG.7

# FIG.8

21

## FIG_9

## FIG_10